(19) Europäisches Patentamt
European Patent Office
Office européen des brevets

(11) **EP 4 075 375 A1**

(12) **EUROPEAN PATENT APPLICATION**

(43) Date of publication:
**19.10.2022 Bulletin 2022/42**

(21) Application number: **21168115.0**

(22) Date of filing: **13.04.2021**

(51) International Patent Classification (IPC):
**G06T 5/00** (2006.01)     **G06T 5/50** (2006.01)
**G06T 5/20** (2006.01)

(52) Cooperative Patent Classification (CPC):
**G06T 5/002; G06T 5/007; G06T 5/20; G06T 5/50;**
G06T 2207/10036

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Gigler, Alexander Michael
  86836 Untermeitingen (DE)**
• **Goldammer, Matthias
  80687 München (DE)**
• **Krämer, Philipp
  81549 München (DE)**
• **Prieto de Valle, Lucia Margarita
  81677 München (DE)**

(54) **FILTERING SPECTRAL IMAGING WITH MINIMUM SPECTRAL CROSS-CONTAMINATION**

(57)     The invention discloses a computer implemented method for modifying spectral imaging for gaining minimum spectral cross-contamination, wherein spectral channel images of a spectral cube of a scene are modified by an illumination mask, wherein the illumination mask is generated by convolutional low-pass filtering of a first spectral channel image of the spectral cube.

Furthermore, a corresponding spectroscopy system, a corresponding computer program product, and a corresponding computer-readable storage medium are disclosed.

FIG 3

EP 4 075 375 A1

**Description**

FIELD OF THE INVENTION

The present invention relates to a computer implemented method and system for modifying spectral imaging for gaining minimum spectral cross-contamination. Further, the present invention relates to a corresponding computer program product and a computer-readable storage medium.

Spectroscopy is the study of the interaction between matter and electromagnetic radiation as a function of the wavelength or frequency of the radiation. In simpler terms, spectroscopy is the precise study of colour as generalized from visible light to all bands of the electromagnetic spectrum; indeed, historically, spectroscopy originated as the study of the wavelength dependence of the absorption by gas phase matter of visible light dispersed by a prism.

Spectroscopy, primarily in the electromagnetic spectrum, is a fundamental exploratory tool in the fields of physics, chemistry, and astronomy, allowing the composition, physical structure and electronic structure of matter to be investigated at the atomic, molecular and macro scale, and over astronomical distances. Important applications arise from biomedical spectroscopy in the areas of tissue analysis and medical imaging.

BACKGROUND OF THE INVENTION

Spectral imaging (SI) is imaging that uses multiple bands across the electromagnetic spectrum. While an ordinary camera captures light across only three wavelength bands in the visible spectrum, red, green, and blue (RGB), spectral imaging encompasses a wide variety of techniques that go beyond RGB.

Spectral imaging may use the infrared, the visible spectrum, the ultraviolet, x-rays, or some combination of the above. It may include the acquisition of image data in visible and nonvisible bands simultaneously, illumination from outside the visible range, or the use of optical filters to capture a specific spectral range. It is also possible to capture hundreds of wavelength bands for each pixel in an image, so called Hyper Spectral Imaging (HSI).

HSI is an imaging method that integrates spectroscopy and imaging to obtain both spatial and spectral information from a given field of view. New technologies with increasing spatial resolution have allowed the application of HSI in a wide range of fields, which exploit the chemical information that can be retrieved from the spectrum on each pixel of the sample. These applications include food quality control, medical applications, material sorting, among others.

Analogous to RGB images where each pixel consists of three colour channels, spectral cubes' pixels can consist of several wavelength channels, for example ranging from VIR to NIR spectral regions. As a result, SI data is stored in a three-dimensional cube, where the third dimension belongs to the spectral information and each channel image belongs to the spectral response for a particular wavelength.

The final goal of SI is to be able to detect materials, contamination, or substance concentration in a sample, as well as aid in the sorting process, among other applications. Classification and anomaly detection algorithms are applied for this purpose. The processing of this data is challenging due to its high-dimensionality and the presence of intensity inhomogeneities, which derive from the fact that the imaging array possesses different physical properties than other imaging methods.

The measurement process of imaging is affected by various conditions. Technologically, imaging in a reflection geometry relies on the illumination of a scene and the detection of the backscattered waves. In the case of spectral imaging, there is the requirement, as in all spectroscopic applications, to prevent the detector from directly reflected waves as the scattered portion of the wave is typically weak compared to it.

Hence, there is the intrinsic need for two rather independent pathways. This is typically realized by a certain geometrical arrangement for the illumination and detection scheme (significant angle and distance between source and detector). Due to this geometric arrangement, sample structure and topography, can become obstacles to the measurement procedure. Furthermore, if parts of the sample are unfavourably positioned, there may be waves scattered off a first sample surface and reflected by a second sample surface hitting the detector and being falsely attributed to this second sample (detector pointed at surface two is receiving information from surface one).

For automation, the main purpose of machine vision is the segmentation of images. The more reliable and consistent the segmentation is, the more robust (and hence faster) the automation can be operated. To achieve a stable and robust image segmentation based on classification from spectral information, topographic effects must be minimized. This is achieved by correcting the recorded spectral image data (= spectral cubes) using appropriate pre-processing to compensate the effects of topography, shadowing, illumination, etc. on the intensity profiles.

Hence, the problems tackled in the application are:

- Spectral imaging datasets often suffer from shadows induced by the recording geometry.

- Topographic features often cause scaling (intensity scaling (multiplicative)) and shifting (intensity offset (additive)) of the recorded spectral data e.g. due to the angle with respect to the surface normal at which the scattering occurs.

- Spectral contamination due to reflection / scattering off adjacent objects.

In the prior art various solutions for coping with these problems are described. The simplest and most-used approach is to apply pre-processing and normalization techniques to diminish scattering and shadowing effects. An example is disclosed in Gowen A and Downey G and Esquerre C and O'Donnell C.P. "Use of spectral pre-processing methods to compensate for the presence of packaging film in visible-near infrared hyperspectral images of food products"; In: Journal of Spectral Imaging 1.a1 (2010). issn: 2040-4565. doi: 10.1255/jsi.2010.a1.

SUMMARY OF THE INVENTION

The objective of the present invention is to provide a solution for improving spectral imaging by overcoming above mentioned problems.

To accomplish the objective, the present invention provides a solution according to the independent claims. Advantageous embodiments are provided in the dependent claims.

According to a first aspect of the invention the proposed pre-processing method is based on an illumination mask, which compensates for topographically induced intensity variations which cannot be attributed to by the spectral response of the material on the entire SI cube of data (SI cube = 2x spatial + 1x spectral dimension) before entering data modelling and classification algorithms.

The illumination mask is extracted from the channel image of a spectral data cube (= one slice of the cube = one 2D-spatial representation at any selected wavelength channel) with the maximum (mean) reflectance (= minimum absorption).

A low-pass filter, e.g. Butterworth, Gaussian, or raised cosine is applied in the Fourier domain to the selected maximum reflectance channel image. Other low-pass filters can be used such as a 'step-function' or 'ideal filter'. The alternatives are typically subject to ringing artifacts.

The intensity correction challenge for SI stems from the fact that correcting only in the spatial domain may modify the spectral features of the corrected pixels. An independent correction for each channel would certainly lead to the loss of spectral information. For this reason, the illumination mask for the SI cube is extracted from only one channel image.

The proposed method consists of following steps:

- Determine a 3D spectral image (= SI cube) of a scene, e.g. one or more objects.

- Select one spectral channel image on the spectral axis where the SI cube contains the least significant information, i.e. minimal absorption = maximum reflectance. This spectral channel image with the maximum reflectance is selected since a low reflectance in this channel will be caused by the absence of incident light instead of the high absorption of the samples (= objects). Preferably, the average reflectance spectrum is calculated for the entire SI cube and the spectral channel image with the highest value is selected.

- Identify the spatial features in the spectral channel image in the Fourier-domain and derive the appropriate low-pass filtering parameters.

- Retrieve the illumination mask (= intensity mask) by calculating the filtered spectral channel image, which corresponds to the real value of the Inverse Fourier Transform of the multiplication of the selected low-pass filter and the Fourier Transform of the spectral channel image. Then correct the SI cube (i.e. all channels of the cube are corrected based on the illumination mask).

- This yields data rescaled and/or adjusted to an as-if-the-sample-were-flat state (within reasonable limits).

Smooth intensity changes in images are translated as small frequencies in the Fourier domain, while high contrast and small features are associated to large frequencies. Low pass filtering retrieves small frequencies from the Fourier domain, which allows the extraction of intensity inhomogeneities (low contrast variation associated with low frequencies).

Preferably, a Butterworth filter is chosen as a low-pass filter since it presents no ring artifacts and is adjustable with two parameters: the cut-off frequency and the order of the filter. The cut-off frequency changes the frequency limit to be filtered, and the filter order denotes the variation between a Gaussian approximation and an ideal step filter.

The invention claims a computer implemented method for modifying spectral imaging for gaining minimum spectral cross-contamination, wherein spectral channel images of a spectral cube of a scene are modified by an illumination mask, wherein the illumination mask is generated by convolutional low-pass filtering of a first spectral channel image of the spectral cube.

By selecting an appropriate first channel image the method yields to data which are rescaled and/or adjusted to an as if samples in the scene were flat within reasonable limits.

In a further embodiment the method comprising the following steps:

- determining the spectral cube of the scene, whereby the spectral cube consists of one spectral channel image for every pre-defined wavelength,
- selecting the first spectral channel image according to a pre-defined first rule,
- deriving low-pass filtering parameters of a low-pass filter according to a pre-defined second rule,
- generating the illumination mask by applying the low-pass filter in the Fourier domain to first spectral channel image of the spectral cube, and
- modifying the spectral channel images by the illumination mask through applying a third rule.

In a further embodiment the first rule is defined by the fact that the spectral image contains the least significant sample information of the scene.

In a further embodiment the least significant sample information means maximum reflectance.

The spectral channel image with the maximum reflectance is selected since a low reflectance in this channel will be caused by the absence of incident light instead of the high absorption of the samples.

In a further embodiment average reflectance spectrum values are calculated for the spectral channel images and the first spectral channel image is the spectral channel image with the highest value.

In a further embodiment the second rule comprises order and cut-off frequency of the low-pass filter, wherein the order is chosen to approximate a smooth frequency response, and the cut-off frequency is based on a smallest resolvable 2D spatial dimension in the scene.

In a further embodiment the low-pass filter is a Butterworth filter, preferably of the order 1 or 2.

In a further embodiment the third rule is: dividing the intensity value of every pixel of the spectral cube by the intensity value of the corresponding pixel of the illumination mask.

In a further embodiment the spectral imaging is hyper spectral imaging.

Furthermore, the invention claims a spectroscopy system comprising a computational device designed to perform a method according to the inventive method.

Furthermore, the invention claims a computer program product comprising instructions which, when the program is executed by a computational device, cause the computational device to carry out the steps of the method according to the invention.

Finally, the invention claims a computer-readable storage medium comprising instructions which, when executed by a computational device, cause the computational device to carry out the steps of the method of claim according to the invention.

Advantages of the invention are:

- No spatial region of interest is needed. This is saving an additional pre-classification step.

- The method can be applied in multi-material HSI measurements without contaminating spectral features of each material.

- No contamination of regions by the data from the region of interest where the filter was derived compared to existing solutions.

- No need for spatial illumination arrays (local shadowreduction), but in its applicability, even regions in the shadow can be lifted and be accounted for.

- Previous knowledge about the sample is not required.

- The method is software-based, hence does not require additional measurements or 3D sample reconstruction.

Further benefits and advantages of the present invention will become apparent after a careful reading of the detailed description with appropriate reference to the accompanying drawings.

BRIEF DESCRIPTION OF THE DRAWINGS

FIG. 1       shows maximum reflectance channel selection based in the cube mean spectrum,

FIG. 2       shows a Butterworth filter radial cross section for different parameters: a) different filter order n and b) varying cut-off frequency $D_0$ and comparison with Gaussian filter, and

FIG. 3       shows original balanced vs. low-pass filtering corrected spectra.

DETAILED DESCRIPTION OF THE INVENTION

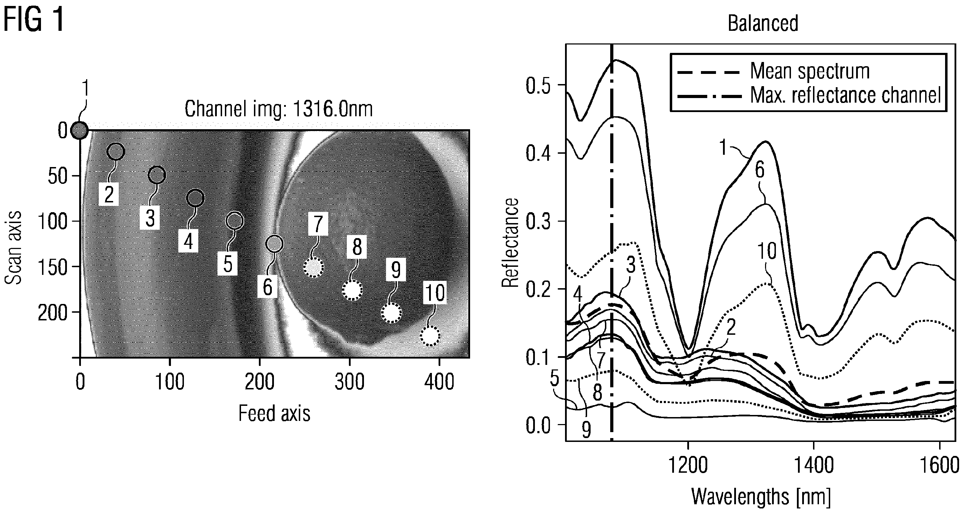

The invention is described by an embodiment using Hyper Spectral Imaging (HIS). The intensity correction challenge for HSI stems from the fact that correcting only in the spatial domain may modify the spectral features of the corrected pixels. An independent correction for each channel would certainly lead to the loss of spectral information. For this reason, the illumination mask for the HSI cube is extracted from only one channel image.
The introduced correction method obtains the illumination mask from the highest reflectance channel image f $(x, y, \lambda_{max})$ (= first rule). This spectral channel image is selected since a low reflectance in this channel will be caused by the absence of incident light instead of the high absorption of the scene/sample/object. The average reflectance spectrum is calculated for the entire HSI cube and the highest value is selected as observed as illustrated in FIG. 1 by the dotted line "Max. reflectance channel".
Once the highest reflectance channel image (= first spectral channel image) is selected, the low-pass filter (selected according to a second rule) is applied, hence extracting the illumination mask. This follows the standard steps for filtering in the Fourier domain and extracting the illumination mask.

1. Mirror pad the first spectral channel image f $(x, y, \lambda_{max})$ to avoid wraparound error

2. Fourier transform the first spectral channel image:

$$F(u, v) = FT[f (x, y, \lambda_{max}].$$

3. Apply filtering in the Fourier domain multiplying by the filter F(u, v)H(u, v), this equals a convolution operation in the spatial domain. For example, Butterworth low-pass filter can be used.

4. Apply inverse Fourier transform to retrieve the low-pass filtered first spectral channel image and remove padding to retrieve the illumination mask:

$$f' (x, y, \lambda_{max})= real\{IFT[F(u,v)*H(u,v)]\}$$

5. Finally, for the correction of the data cube, the entire cube is divided (= third rule) by the illumination mask (LPF), scaling every pixel spectrum by a different scaling factor, whose value depends on the estimated intensity of that pixel.

$$f'(x, y, \lambda) = f (x, y, \lambda)/LPF[f(x, y, \lambda_{max})]$$

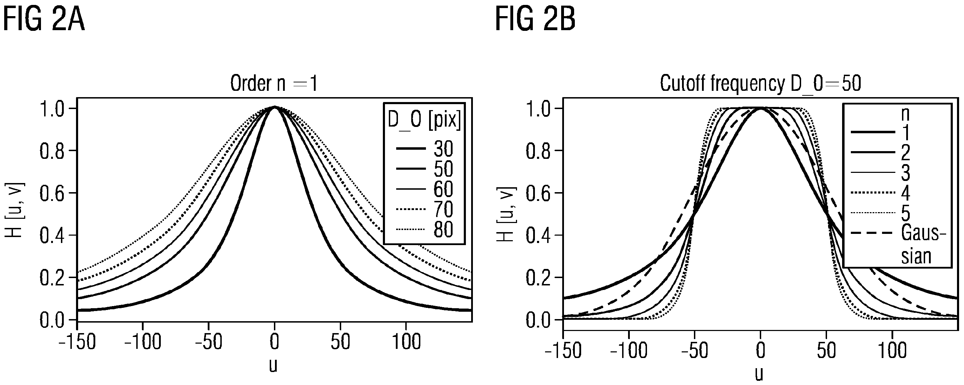

The illumination mask is estimated with the highest reflectance wavelength and the same mask corrects the entire cube, hence maintaining the spectral integrity and coherency of every pixel.
The low-pass filter, preferably a Butterworth filter according to FIG. 2, is defined by order (a measure for steepness) and cut-off frequency. Subsequently, an example for a scene with fruits and vegetables, comprising olives and tomatoes, is described.
As for the choice of the order it can be said:

-    To prevent the low-pass filter from inducing ringing, the order of a Butterworth filter is chosen as n=1 or n=2 for which it approximates a Gaussian frequency response. This selection is rather general for this kind of measurement / image data.

As for the choice of the cut-off frequency it can be said:

- Let there be a HSI setup acquiring data from samples.

- Let the HSI cube have a spatial resolution 640 px x 640 px.

- There are fruits including olives and tomatoes to be investigated.

- Olives or tomatoes are the smallest or second smallest samples respectively in the scene.

- The spatial frequency resembling the shape of an olive (a tomato) corresponds to a sine wave where the 0 to 180° section basically matches with the shape of the olive (tomato) in a cross-section view.

- Within the field of view, we can fit in 10 (6) repeats of this spatial frequency.

- Olive: 640 / 10 = 64 pixels per sine wave (tomato: 640 / 6 = 107 pixels per sine wave).

- The low-pass filter must be chosen to still be able to reconstruct the smoothened topography, i.e. to be able to recognize the olive (tomato) still.

- To accommodate the half-width of the filter function, i.e. a Gaussian from the Butterworth for n=1 or n=2, we apply a safety factor of two for the olive cut-off: $D_0 = 64 / 2 = 32$ (tomato cut-off: $D_0 = 107 / 2 = 53.5 =$ ca. 50)).

- The selection of the $D_0$ cut-off frequency is unique to the application in terms of pixel resolution vs. objects (= samples) in the field of view. Hence, there is no oneselection fits all.

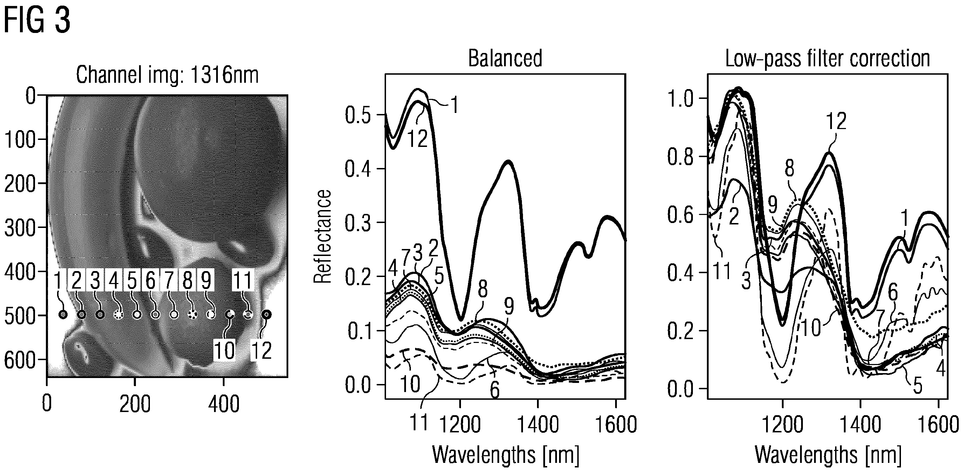

FIG. 3 illustrates the effect of low-pass filtering according to the invention of HSI of a scene with vegetables and fruits as samples.

The illustrated pre-processing method is applied before further Machine Learning. Hence it is compensating for topography cp. to simple scaling procedures without local context (neighbouring positions on objects).

The latter is describing global correction approaches. These are typically causing spectral cross-contamination between different regions in the dataset. This means that the correction algorithm is adapting to one region of the dataset and then applying its "correction" to all other regions. This may work for scenes where only one type of material is present, but even there it will mix up the features between the different regions of the sample.

Example: given an HSI-cube of a sample region of sand castles (= topography) with inhomogeneous distributed local humidity (= wet at one site, dry at all other regions let the global correction be adapting to the wet region. The global correction will infer "humidity" to all the dry regions simultaneously when correcting for topographic features.

The invention using a smooth low-pass filter is suppressing ringing artifacts in the corrected data compared to more aggressive / more rigorous / sharper low-pass filtering in the Fourier-domain. (cp. FT filtering artifacts in electronics)

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

**Claims**

1. Computer implemented method for modifying spectral imaging for gaining minimum spectral cross-contamination, wherein spectral channel images of a spectral cube of a scene are modified by an illumination mask, wherein the illumination mask is generated by convolutional low-pass filtering of a first spectral channel image of the spectral cube.

2. Method according to claim 1, comprising the steps:

    - determining the spectral cube of the scene, whereby the spectral cube consists of one spectral channel image for every pre-defined wavelength,
    - selecting the first spectral channel image according to a pre-defined first rule,
    - deriving low-pass filtering parameters of a low-pass filter according to a pre-defined second rule,

- generating the illumination mask by calculating the filtered spectral channel image, which corresponds to the real value of the Inverse Fourier Transform of the multiplication of the selected low-pass filter and the Fourier Transform of the spectral channel image, and
- modifying the spectral channel images by the illumination mask through applying a third rule.

3. Method according to claim 1,
wherein the first rule is defined by the fact that the spectral image contains the least significant sample information of the scene.

4. Method according to claim 3,
wherein the least significant sample information means maximum reflectance.

5. Method according to claim 4,
wherein average reflectance spectrum values are calculated for the spectral channel images and the first spectral channel image is the spectral channel image with the highest value.

6. Method according to one of the claims 2 to 5,
wherein the second rule comprises order and cut-off frequency of the low-pass filter,
wherein the order is chosen to approximate a smooth frequency response, and
the cut-off frequency is based on a smallest resolvable 2D spatial dimension in the scene.

7. Method according to one of the previous claims,
wherein the low-pass filter is a Butterworth filter.

8. Method according to one of the claims 2 to 7,
wherein the third rule is: dividing the intensity value of every pixel of the spectral cube by the intensity value of the corresponding pixel of the illumination mask.

9. Method according to one of the previous claims,
wherein the spectral imaging is hyper spectral imaging.

10. Spectroscopy system comprising a computational device designed to perform a method according to one of the claims 1 to 9.

11. Computer program product comprising instructions which, when the program is executed by a computational device, cause the computational device to carry out the steps of the method according to one of the claims 1 to 9.

12. Computer-readable storage medium comprising instructions which, when executed by a computational device, cause the computational device to carry out the steps of the method of claim according to one of the claims 1 to 9.

FIG 1

Channel img: 1316.0nm

Balanced

EP 4 075 375 A1

FIG 2A

FIG 2B

Order n = 1

Cutoff frequency D_0 = 50

EP 4 075 375 A1

FIG 3

Channel img: 1316nm

Balanced

Low-pass filter correction

Europäisches
Patentamt

European
Patent Office

Office européen
des brevets

# EUROPEAN SEARCH REPORT

Application Number

EP 21 16 8115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 111 476 738 A (QIDONG OPTOELECTRONIC REMOTE SENSING CENTER OF SHANGHAI INST OF TECHNI) 31 July 2020 (2020-07-31) * abstract; claim 1 * * paragraph [0006] - paragraph [0026] * | 1-12 | INV. G06T5/00 G06T5/50 G06T5/20 |
| A | US 2015/302567 A1 (PATTERSON KAREN W [US]) 22 October 2015 (2015-10-22) * abstract; figures 6A,6B * * paragraph [0026] - paragraph [0059] * | 1-12 | |
| A | US 2004/153284 A1 (BERNSTEIN LAWRENCE S [US] ET AL) 5 August 2004 (2004-08-05) * abstract; figures 1,2 * * paragraph [0008] - paragraph [0041] * * paragraph [0051] - paragraph [0052] * | 1-12 | |
| A | US 2010/002947 A1 (RILEY RONALD A [US] ET AL) 7 January 2010 (2010-01-07) * abstract; figure 2 * * paragraph [0032] - paragraph [0036] * | 1-12 | |
| A | US 2015/161768 A1 (ARDOUIN JEAN-PIERRE [CA] ET AL) 11 June 2015 (2015-06-11) * abstract; figures 3,4 * * paragraph [0062] - paragraph [0110] * | 1-12 | TECHNICAL FIELDS SEARCHED (IPC) G06T |

The present search report has been drawn up for all claims

| Place of search | Date of completion of the search | Examiner |
|---|---|---|
| Munich | 30 September 2021 | Herter, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 8115

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2021

| Patent document cited in search report | | Publication date | Patent family member(s) | | | Publication date |
|---|---|---|---|---|---|---|
| CN 111476738 | A | 31-07-2020 | NONE | | | |
| US 2015302567 | A1 | 22-10-2015 | US | 2015302567 | A1 | 22-10-2015 |
| | | | WO | 2015164214 | A1 | 29-10-2015 |
| US 2004153284 | A1 | 05-08-2004 | US | 2004153284 | A1 | 05-08-2004 |
| | | | US | 2005180651 | A1 | 18-08-2005 |
| | | | WO | 2004069305 | A2 | 19-08-2004 |
| US 2010002947 | A1 | 07-01-2010 | BR | PI0910526 | A2 | 10-05-2016 |
| | | | EP | 2310982 | A1 | 20-04-2011 |
| | | | US | 2010002947 | A1 | 07-01-2010 |
| | | | WO | 2010005920 | A1 | 14-01-2010 |
| US 2015161768 | A1 | 11-06-2015 | US | 2015161768 | A1 | 11-06-2015 |
| | | | US | 2016259962 | A1 | 08-09-2016 |
| | | | US | 2017277969 | A1 | 28-09-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GOWEN A ; DOWNEY G ; ESQUERRE C ; O'DON-NELL C.P.** Use of spectral pre-processing methods to compensate for the presence of packaging film in visible-near infrared hyperspectral images of food products. *Journal of Spectral Imaging,* 2010, vol. 1.a1, ISSN 2040-4565